(19) Europäisches Patentamt
European Patent Office
Office européen des brevets

(11) **EP 3 507 656 B1**

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(21) Anmeldenummer: **17777016.1**

(22) Anmeldetag: **27.09.2017**

(51) Int Cl.:
**G05B 11/42** *(2006.01)*

(86) Internationale Anmeldenummer:
**PCT/EP2017/074466**

(87) Internationale Veröffentlichungsnummer:
**WO 2018/060230 (05.04.2018 Gazette 2018/14)**

(54) **REGELVORRICHTUNG MIT EINSTELLBARKEIT DES REGELVERHALTENS**

CONTROL DEVICE WITH ADJUSTABLE CONTROL BEHAVIOR

DISPOSITIF DE RÉGULATION AVEC AJUSTABILITÉ DU COMPORTEMENT DE RÉGULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2016 DE 102016011865**

(43) Veröffentlichungstag der Anmeldung:
**10.07.2019 Patentblatt 2019/28**

(73) Patentinhaber: **KHD Humboldt Wedag GmbH 51067 Köln (DE)**

(72) Erfinder: **BURGWINKEL, Dieter 51107 Köln (DE)**

(56) Entgegenhaltungen:
**EP-A1- 2 775 360**

EP 3 507 656 B1

**Beschreibung**

Die Erfindung betrifft eine Regelvorrichtung (1) zur Regelung eines technischen Prozesses (2), aufweisend mindestens zwei Vorrichtungen zum Erfassen von je einem Eingangssignal, und mindestens eine Vorrichtung zum Ausgeben von einer Stellgröße (u), welche intern eine Differenz bildet zwischen einer Führungsgröße (w) als erstem Eingangssignal, und einer Regelgröße (y) als zweitem Eingangssignal und daraus eine Stellgröße (u) ermittelt, des Weiteren aufweisend mindestens eine interne Signalverarbeitung zur Beeinflussung des Zeitverhaltens sowie des Dämpfungsverhaltens des von Regelvorrichtung (1) und dem technischem Prozess (2) zusammen gebildeten Regelkreises.

Zur Regelung von technischen Prozessen sind sogenannte PID-Regler bekannt, welche durch Erfassen einer Führungsgröße und einer Regelgröße ein Signal für eine Stellgröße erzeugen. Ziel eines solchen PID-Reglers ist es, das jedem technischen Prozess inne liegende Übertragungsverhalten bei der Generierung der Stellgröße zu berücksichtigen. Im konkreten Fall soll durch Messen der bereits in einen technischen Prozess eingeführten Stellgröße deren Auswirkung auf die Regelgröße bei einer weiteren Einführung dieser Stellgröße berücksichtigt werden. Der PID-Regler generiert einerseits in seinem P-Zweig (P für "proportional") einen Anteil seiner Stellgröße proportional zum Regelfehler (Differenz zwischen Führungsgröße und Regelgröße), addiert dazu über seinen I-Zeig (I für "intergral") einen weiteren Stellgrößenanteil durch Integration des Regelfehlers und berücksichtigt damit die Auswirkung des Steuerfehlers der Vergangenheit und addiert hierzu über seinen D-Zweig (D für "differential") einen weiteren Stellgrößenanteil, der die aktuelle Änderungsrate des Regelfehlers berücksichtigt. Stellgrößen können Leistungsaufnahmen eines technischen Prozesses sein, können Mischungsverhältnisse, Aufgabe einer Stoffmenge und viele weitere mögliche Größen sein. Der PID-Regler ist in der Lage, einen technischen Prozess, mit einem Verzögerungsverhalten höherer Ordnung so zu regeln, dass die Regelgröße auch bei Einfluss von Störgrößen möglichst nahe an der Führungsgröße bleibt.

Ein PID- Regler ist von seinen Parametern her dem Zeitverhalten eines technischen Prozesses anzupassen. Für eine Optimierung der Regelparameter ist es deshalb notwendig, sehr gute Kenntnisse über den zu regelnden technischen Prozess zu haben. Liegt die genaue Prozess-Kenntnis nicht vor, so ist es notwendig, über das Reaktionsverhalten des technischen Prozesses, insbesondere die Änderung der Regelgröße bei erzwungener Änderung der Stellgröße, ein Prozess-Modell zu schätzen, um daraus wiederum die einzelnen Regelparameter des PID-Reglers abzuschätzen. Je nach Eigenschaften des zu regelnden technischen Prozesses können geringfügige Änderungen der Regelparameter eine große Abweichung des Regelverhaltens erzeugen. Zur Abschätzung von Regelparametern wurden verschiedene Strategien entwickelt, die mit vertretbarem Zeitaufwand die Regelparameter mit befriedigendem Maße abschätzen lassen. Für die Anwendung einer solchen Regelstrategie sind aber ebenfalls eine hohe Expertise und auch ein gewisses Maß an Erfahrung notwendig. Die Optimierung der Parametrierung eines Reglers erfordert daher ebenfalls ein hohes Maß an Spezialwissen. Die Theorie eines Reglers, insbesondere die Theorie eines PID-Reglers mitsamt den bekannten Parametrierungsstrategien wird an dieser Stelle als bekannt vorausgesetzt.

Industrielle Anlagen weisen üblicherweise eine größere Anzahl an Reglern auf. Bei der Inbetriebnahme einer industriellen Anlage wird ein erhebliches Maß mit der Parameteroptimierung verbracht. Sobald die industrielle Anlage eingefahren ist, übernehmen Fachleute, die mit dem industriellen Prozess selbst betraut sind, die Kontrolle der industriellen Anlage. Da industrielle Anlagen langfristig gewissen Schwankungen unterliegen, sei es durch Variation der Rohstoffe, durch Änderungen von Maschinenleistungen oder durch stete Optimierung von Fertigungs- oder Herstellungsprozessen, werden auch die Regelparameter einer industriellen Anlage über die Zeit verstimmt. Die erneute Parametrierung erfordert erneut ein hohes Maß an Zeit und Expertise. Der Grund für die notwendige Expertise und den Zeitaufwand ist, dass die Regelparameter dem veränderten Prozessverhalten angepasst werden müssen. Nicht jedoch nehmen die einstellbaren Regelparameter direkten Bezug auf das Regelverhalten eines Reglers, wie das Dämpfungsverhalten und das Zeitverhalten des Regelvorgangs. EP2775360 beschreibt eine PID Regelungs-Vorrichtung.

Der Erfindung liegt daher die Aufgabe zugrunde, eine Regelvorrichtung zur Verfügung zu stellen, welche die Vorteile eines PID-Reglers bewahrt und deren Nachteil einer schwierigen Einstellung überwindet.

Die erfindungsgemäße Aufgabe wird dadurch gelöst, dass mindestens zwei Filtervorrichtungen (4) und (7), ein Verstärkungsglied (5) und ein I-Glied (6) zur Signalverarbeitung vorgesehen sind, wobei eine erste Filtereinrichtung (4) derart mit dem Prozess zusammenwirkt, dass sich das Zeitverhalten des von der Regelvorrichtung (1) und dem technischem Prozess (2) zusammen gebildeten Regelkreises durch eine Veränderung der Eigenschaft der ersten Filtereinrichtung (4) beeinflussen lässt, und dass mindestens ein Verstärkungsglied (5) vorhanden ist, welches derart mit dem Prozess zusammenwirkt, dass sich das Dämpfungsverhalten des von Regelvorrichtung (1) und Prozess (2) gebildeten Regelkreises durch eine Veränderung des Verstärkungsfaktors des Verstärkungsglieds (5) beeinflussen lässt und dass eine zweite Filtereinrichtung (7) sowie das I-Glied (6) einzeln voneinander aktivierbar sind. Vorteilhafte Ausgestaltungen des Reglers sind in Unteranspruch 1 angegeben.

Nach der Erfindung ist vorgesehen, dass mindestens zwei Filtervorrichtungen zur Signalverarbeitung vorgesehen sind, wobei eine erste Filtereinrichtung (4) derart mit dem zu regelnden technischen Prozess (2) zusammenwirkt, dass sich das Zeitverhalten des von der Regelvorrichtung (1) und dem technischem Prozess (2) zusammen gebildeten Regelkreises durch eine Veränderung der Eigenschaft der ersten Filtereinrichtung (4) beeinflussen lässt, und dass mindestens ein Verstärkungsglied (5) vorhanden ist, welches derart mit dem zu regelnden technischen Prozess (2) zusammenwirkt, dass sich das Dämpfungsverhalten des von der Regelvorrichtung (1) und zu regelnden technischen Prozess (2) gebildeten Regelkreises durch eine Veränderung des Verstärkungsfaktors des Verstärkungsglieds (5) beeinflussen lässt und dass eine zweite Filtereinrichtung (7) sowie ein I-Glied (6) einzeln und unabhängig voneinander aktivierbar sind. Anders als bei PID-Reglern der gattungsgemäßen Art werden bei der erfindungsgemäßen Regelvorrichtung nicht einzelne Linearfaktoren dreier verschiedener Glieder, nämlich P-Glied (zur Bewertung des Regelfehlers), I-Glied (zur Bewertung der zeitlichen Integralsumme des Regelfehlers) und D-Glied (zur Bewertung der Änderungsrate des Regelfehlers) parametriert, sondern es werden die in Anspruch 1 genannte erste Filtereinrichtung (4) und der dort genannte Verstärkungsfaktor (5) eingeführt und parametriert, wodurch der Regelkreis in zielgerichteter Weise in Richtung eines gewünschten Zeitverhaltens und Dämpfungsverhaltens beeinflusst werden kann. Je nach Art und Eigenschaft des technischen Prozesses können in der erfindungsgemäßen Regelvorrichtung ein Integrator (I-Glied) (6) und ein weiteres Filter (7) hinzu- oder abgeschaltet werden. Die der Erfindung zu Grunde liegende Idee ist es also, für bestimmte technische Prozessarten, verschiedene Filter (4, 7), das Verstärkungsglied (5) und die Aktivierung des I-Gliedes (6) so zu konfigurieren, dass sie in ihrer für den technischen Prozess typischen Zusammenstellung leichter parametriert werden können. So nimmt die Erfindung in Kauf, dass nicht ein Universalregler für alle Prozesse geeignet ist, sondern es ist vorgesehen, durch Kombination der verschiedenen Komponenten, die anschließende Optimierung der Stellparameter zu vereinfachen. Dies ist möglich, da die Parametrierung der erfindungsgemäßen Regelvorrichtung zielgerichtet in Richtung einer Parametrierung von Zeitverhalten und Dämpfungsverhalten des Regelkreises erfolgt. Die Parametrierung erfolgt somit zweistufig. Die Vorwahl der Filterkombination braucht nur einmal geschehen, denn die Art des technischen Prozesses verändert sich normalerweise nicht mehr. Erst nachdem die Zusammenstellung der Prozessart bestimmt wurde, wird die anschließende Parametrierung durchgeführt, die auch im laufenden Betrieb einer industriellen Anlage von mit weniger Fachwissen über Regler ausgestatteten Mitarbeitern durchgeführt werden kann.

Es ist vorgesehen, dass im Falle eines zu regelnden Prozesses (2) mit einem Übergangsverhalten mit Ausgleich, d.h. eines Prozesses, dessen Sprungantwort auf einen neuen Beharrungszustand zuläuft, die zweite Filtereinrichtung (7) deaktiviert und das I-Glied (6) aktiviert ist, wodurch über die erste Filtereinrichtung (4) das Zeitverhalten und über das Verstärkungsglied (5) das Dämpfungsverhalten des von Regelvorrichtung (1) und Prozess (2) gebildeten Regelkreises beeinflusst wird und über das I-Glied (6) eine verschwindende Regelabweichung bewirkt wird.

Im Falle eines zu regelnden Prozesses (2) mit einem Übergangsverhalten ohne Ausgleich und mit der Forderung nach einer Positionsfolgeregelung, ist in vorteilhafter Weise vorgesehen, dass die zweite Filtereinrichtung (7) aktiviert und auch das I-Glied (6) aktiviert sind, wodurch die erste Filtereinrichtung (4), das Verstärkungsglied (5) und das I-Glied (6) durch eine zweite Filtervorrichtung (7) ergänzt werden, und den aus Regelvorrichtung (1) und Prozess (2) gebildeten Regelkreis zusätzlich stabilisiert.

Schließlich ist im Falle eines zu regelnden Prozesses (2) mit einem Übergangsverhalten ohne Ausgleich und ohne die Forderung nach einer Positionsfolgeregelung in vorteilhafter Weise vorgesehen, dass sowohl die zweite Filtereinrichtung (7) als auch das I-Glied (6) deaktiviert sind, wodurch nur die erste Filtereinrichtung (4) das Zeitverhalten und das Verstärkungsglied (5) das Dämpfungsverhalten des aus Regelvorrichtung (1) und Prozess (2) gebildeten Regelkreises bestimmen.

In erster, konkreter Ausgestaltung der erfindungsgemäßen Regelvorrichtung ist vorgesehen, dass die erste Filtereinrichtung (4) eine Übertragungsfunktion erster, zweiter oder dritter Ordnung aufweist, die definiert ist durch

erste Ordnung:

$$G_F(s) = \left( \frac{(1+T_{D1}s)}{(1+T_{R1}s)} \right),$$

zweite Ordnung

$$G_F(s) = \left( \frac{(1+T_{D1}s) \cdot (1+T_{D2}s)}{(1+T_{R1}s) \cdot (1+T_{R2}s)} \right),$$

dritte Ordnung:

$$G_F(s) = \left( \frac{(1+T_{D1}s) \cdot (1+T_{D2}s) \cdot (1+T_{D3}s)}{(1+T_{R1}s) \cdot (1+T_{R2}s) \cdot (1+T_{R3}s)} \right),$$

worin $T_{D1}$, $T_{D2}$ und $TD_3$ differenzierende Zeitkonstanten des Filters > Null sind, $T_{R1}$, $T_{R2}$ und $T_{R3}$ verzögernde Zeitkonstanten des Filters > Null sind, und s ein Laplace-Operator ist, und die Summe aller differenzierenden Zeitkonstanten $T_{D1}$, $T_{D2}$ und $T_{D3}$ der ersten Filtereinrichtung (4) als $T_{D\_Gesamt}$ definiert ist, nämlich

$$T_{D\_Gesamt} = T_{D1} + T_{D2} + \cdots$$

wobei gefordert wird, dass $T_{D\_Gesamt}$ maximal der Summe aller verzögernden Zeitkonstanten $T_{S1}$, $T_{S2}$, ... inklusive des halben Anteils der ermittelten Totzeit von $\dfrac{T_t}{2}$ des zu regelnden technischen Prozesses (2) entsprechen darf, nämlich

$$T_{D\_Gesamt} \leq T_{S\_Gesamt} + \frac{T_t}{2}$$

mit $T_{S\_Gesamt}$ als die Summe aller verzögernden Zeitkonstanten $T_{S1}$, $T_{S2}$, ... > Null des zu regelnden technischen Prozesses (2), nämlich

$$T_{S\_Gesamt} = T_{S1} + T_{S2} + \cdots = T_S$$

und damit gleich der ermittelten Verzögerungszeitkonstante ($T_S$) eines totzeitbehafteten PT1-Modells zu setzen ist und ($T_t$) die ermittelte Totzeit $\geq$ Null des zu regelnden technischen Prozesses (2) ist, und der Parameter ($C_W$) als Dynamikfaktor der Regelvorrichtung (1) definiert ist, der zwischen 0 und 1 liegt und die differenzierenden Zeitkonstanten des Filters bestimmt und damit das Zeitverhalten des von Regelvorrichtung (1) und dem technischen Prozess (2) gebildeten Regelkreises beeinflusst, nämlich

$$C_W = \frac{T_{D\_Gesamt}}{T_{S\_Gesamt} + \dfrac{T_t}{2}}.$$

In zweiter, konkreter Ausgestaltung der erfindungsgemäßen Regelvorrichtung ist vorgesehen, dass die zweite Filtereinrichtung (7) eine Übertragungsfunktion aufweist, die definiert ist durch

$$G_{FI}(s) = \left( \frac{(1 + T_{DI}s)}{(1 + T_{RI}s)} \right),$$

worin $T_{DI}$ eine differenzierende Zeitkonstante des Filters > Null ist, die definiert ist durch

$$T_{DI} = \alpha \cdot \widetilde{T_{\Sigma}}$$

und $T_{RI}$ eine verzögernde Zeitkonstante des Filters > Null ist, und s ein Laplace-Operator ist, wobei $\alpha$ ein Faktor von 2 bis 4 ist, und $\widetilde{T_{\Sigma}}$ die resultierende konzentrierte Zeitkonstante des zu regelnden technischen Prozesses (2) ist, die ihrerseits definiert ist durch

$$\widetilde{T_{\Sigma}} = T_{S\_Gesamt} + T_R + T_t - T_{D\_Gesamt}$$

mit $T_{S\_Gesamt}$ als Summe aller verzögernden Zeitkonstanten $T_{S1}$, $T_{S2}$, ... > Null des zu regelnden technischen Prozesses (2), nämlich $T_{s\_Gesamt} = T_{S1} + T_{S2} + ... = T_S$ und damit gleich der ermittelten Verzögerungszeitkonstante ($T_S$) eines totzeitbehafteten PT1-Modells zu setzen ist und ($T_R$) die zusätzlich eingebrachte Vorzögerungszeitkonstante der Regelvorrichtung, die gleich der Summe der verzögernden Zeitkonstanten > Null der beiden Filtereinrichtungen (4) und (7), nämlich $T_R = T_{R1} + T_{R2} + ... + T_{RI}$, und ($T_t$) die ermittelte Totzeit $\geq$ Null des zu regelnden technischen Prozesses (2) ist, und $T_{D\_Gesamt}$ als Summe aller differenzierenden Zeitkonstanten $T_{D1}$, $T_{D2}$, ... der ersten Filtereinrichtung (4), ist nämlich $T_{D\_Gesamt} = T_{D1} + T_{D2} + \cdots$.

In dritter, konkreter Ausgestaltung der Erfindung ist vorgesehen, dass der Verstärkungsfaktor ($K_C$) des Verstärkungsgliedes (5) berechnet wird, durch

a) im Falle eines zu regelnden Prozesses (2) mit einem Übergangsverhalten mit Ausgleich, nämlich

$$K_C = \left( \frac{1}{4 \cdot D_W{}^2 \cdot K_S \cdot \widetilde{T_\Sigma}} \right),$$

b) im Falle eines zu regelnden Prozesses (2) mit einem Übergangsverhalten ohne Ausgleich und mit der Forderung nach einer Positionsfolgeregelung,

$$K_C = \left( \frac{1}{8 \cdot D_W{}^2 \cdot K_{IS} \cdot \widetilde{T_\Sigma}{}^2} \right),$$

c) im Falle eines zu regelnden Prozesses (2) mit einem Übergangsverhalten ohne Ausgleich und ohne die Forderung nach einer Positionsfolgeregelung,

$$K_C = \left( \frac{1}{4 \cdot D_W{}^2 \cdot K_{IS} \cdot \widetilde{T_\Sigma}} \right),$$

worin ($D_W$) ein vorzugebender Dämpfungsfaktor $\geq$ Null ist, welches das Dämpfungsverhalten des gesamten Regelkreises beschreibt, ($K_S$) der ermittelte Übertragungsbeiwert des zu regelnden technischen Prozesses mit Ausgleich ist, ($K_{IS}$) der ermittelte Integrationsbeiwert des zu regelnden technischen Prozesses ohne Ausgleich ist, $\widetilde{T_\Sigma}$ die resultierende konzentrierte Zeitkonstante des zu regelnden technischen Prozesses (2) ist, die definiert ist durch

$$\widetilde{T_\Sigma} = T_{S\_Gesamt} + T_R + T_t - T_{D\_Gesamt}$$

mit $T_{S\_Gesamt}$ als Summe aller verzögernden Zeitkonstanten $T_{S1}$, $T_{S2}$, ... > Null des zu regelnden technischen Prozesses (2), nämlich $T_{s\_Gesamt} = T_{S1} + T_{S2} + \cdots = T_S$ und damit gleich der ermittelten Verzögerungszeitkonstante ($T_S$) eines totzeitbehafteten PT1-Modells zu setzen ist, und ($T_R$) die zusätzlich eingebrachte Vorzögerungszeitkonstante der Regelvorrichtung, die gleich der Summe der verzögernden Zeitkonstanten > Null der beiden Filtereinrichtungen, nämlich $T_R = T_{R1} + T_{R2} + \cdots + T_{RI}$ und ($T_t$) die ermittelte Totzeit $\geq$ Null des zu regelnden technischen Prozesses ist und, $T_{D\_Gesamt}$ als Summe aller differenzierenden Zeitkonstanten $T_{D1}$, $T_{D2}$, ... > Null der ersten Filtereinrichtung (4) ist, nämlich $T_{D\_Gesamt} = T_{D1} + T_{D2} + \cdots$.

Anhand der nachfolgend genannten Zeichnung werden im Folgenden die Erfindung sowie Ausführungsbeispiele näher erläutert.

Es zeigen:

Figur 1    einen geschlossenen Regelkreis mit der erfindungsgemäßen Regelvorrichtung,

Figur 2    Zeitdiagramme von Sprungantworten verschiedener Regelkreise.

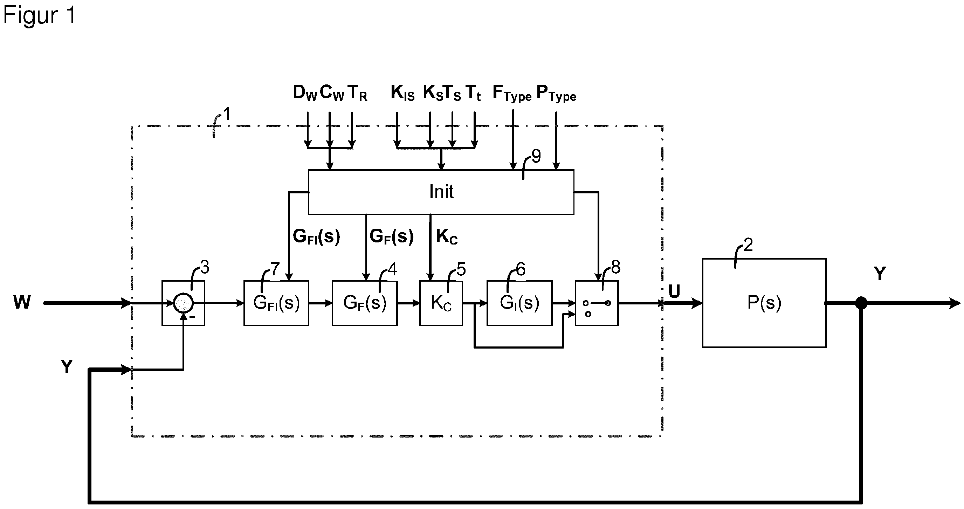

Wie in **Figur 1** skizziert ist, ist die erfindungsgemäße Regelvorrichtung (1) in einem einzelnen Modul oder Baustein integrierbar. In diesem Modul sind die Komponenten Vergleicheinrichtung (3), erste Filtereinrichtung (4) und zweite Filtereinrichtung (7), Verstärkungsglied (5), I-Glied (6) und Umschalter (8) eingeschlossen. Die erfindungsgemäße Regelvorrichtung (1) wird wie eine konventionelle PID-Regelvorrichtung im Regelkreis verschaltet, das heißt der Regelvorrichtung (1) werden Führungsgröße (w) und Regelgröße (y) zugeführt, aus denen die Regelvorrichtung eine Stellgröße (u) zur Beeinflussung des Prozesses (2) erzeugt. Am Prozess (2) wiederum wird die Regelgröße (y) als Ausgangssignal des Prozesses (2) abgegriffen.

Die Parametrierung der erfindungsgemäßen Regelvorrichtung (1) erfolgt durch Vorgabe eines Dämpfungsfaktors ($D_w$), der das Dämpfungsverhalten des von Regelvorrichtung (1) und Prozess (2) gebildeten Regelkreises beeinflusst und der Vorgabe eines Dynamikfaktors ($C_w$), der das Zeitverhalten des von Regelvorrichtung (1) und Prozess (2) gebildeten Regelkreises beeinflusst. Des Weiteren ist der Regelvorrichtung (1) die Angabe der zusätzlich eingebrachten Vorzögerungszeitkonstanten ($T_R$) vorzugeben, mit der sich die Stellgröße der Regelvorrichtung (1) dem Stellglied anpassen lässt.

Alle Parameter der erfindungsgemäßen Regelvorrichtung (1) sind somit zielgerichtet den jeweiligen Eigenschaften der Regelvorrichtung (1) im geschlossenen Regelkreis zugordnet.

Des Weiteren benötigt die erfindungsgemäße Regelvorrichtung (1) die Angabe der Prozesskenngrößen.

Im Falle der Regelung eines Prozesses (2) mit einem Übergangsverhalten mit Ausgleich d.h. eines Prozesses, dessen Sprungantwort auf einen neuen Beharrungszustand zuläuft. ist ein Übertragungsbeiwert ($K_S$), eine ermittelte Totzeit ($T_t$) und die Angabe der ermittelten Verzögerungszeitkonstanten ($T_S$) eines dem Prozessverzögerungsverhalten entsprechenden PT1-Modells anzugeben.

Hierzu ist an der Regelvorrichtung (1) über die Initialisierungseinheit (9) der Parameter der Regelungsart ($P_{Type}$) auf 1 zu setzen.

Hierdurch wird das I-Glied (6) in der Regelvorrichtung (1) zugeschaltet und dessen Überbrückung wieder aufgehoben. Zusätzlich wird die Filtereinrichtung (7) der Regelvorrichtung deaktiviert.

Zum Entwurf der erfindungsgemäßen Regelvorrichtung (1) wird die allgemeine Übergangsfunktion $G_S(s)$ eines Prozesses (2) im sogenannten Laplace- oder Frequenzbereich betrachtet:

$$G_S(s) = \frac{Y(s)}{U(s)} = \frac{b_n s^2 + \ldots + b_1 s + b}{a_n s^2 + \cdots + a_1 s + a_0} \cdot e^{-T_t s}.$$

Für eine totzeitbehaftete Regelstrecke mit Ausgleich mit Verzögerung höherer Ordnung lautet die Übergangsfunktion:

$$G_S(s) = \frac{K_S \cdot e^{-T_t s}}{(1 + T_{S1} s) \cdot (1 + T_{2S} s) \cdot \ldots}.$$

Vereinfacht kann eine solche Regelstrecke auch über ein totzeitbehaftetes PT1-Modell genähert werden, welches über die Prozesskenngrößen, Übertragungsbeiwert ($K_S$), die ermittelte Totzeit ($T_t$) und Angabe der ermittelten Verzögerungszeitkonstante ($T_S$) definiert ist

$$G_S(s) = \frac{K_S \cdot e^{-T_t s}}{(1 + T_S s)}.$$

In der Regelvorrichtung (1) lassen sich über die Initialisierungseinheit (9) und dort über den Parameter zur Filterauswahl ($F_{Type}$) verschiedene Filtertypen der Filtereinrichtung (4) aufprägen.

Mit ($F_{Type}$) = 1 wird die Filtereinrichtung (4) mit der Übertragungsfunktion eines differenzierenden Filters erster Ordnung initialisiert, nämlich

$$G_F(s) = \left( \frac{(1 + T_{D1} s)}{(1 + T_{R1} s)} \right).$$

mit

$T_{D1} > 0$    eine differenzierende Zeitkonstante,
$T_{R1} > 0$    eine verzögernde Zeitkonstante.

Mit ($F_{Type}$) = 2 wird die Filtereinrichtung (4) mit der Übertragungsfunktion eines differenzierenden Filters zweiter Ordnung initialisiert

$$G_F(s) = \left( \frac{(1 + T_{D1}s) \cdot (1 + T_{D2}s)}{(1 + T_{R1}s) \cdot (1 + T_{R2}s)} \right),$$

mit

$T_{D1}$ und $T_{D2} > 0$    differenzierende Zeitkonstanten,
$T_{R1}$ und $T_{R2} > 0$    verzögernde Zeitkonstanten.

Mit ($F_{Type}$) = 3 wird die Filtereinrichtung (4) mit der Übertragungsfunktion eines differenzierenden Filters dritter Ordnung initialisiert

$$G_F(s) = \left( \frac{(1 + T_{D1}s) \cdot (1 + T_{D2}s) \cdot (1 + T_{D3}s)}{(1 + T_{R1}s) \cdot (1 + T_{R2}s) \cdot (1 + T_{R3}s)} \right),$$

mit

$T_{D1}$ bis $T_{D3} > 0$    differenzierende Zeitkonstanten,
$T_{R1}$ bis $T_{R3} > 0$    verzögernde Zeitkonstanten.

Betrachtet man nun die Hintereinanderschaltung der Übertragungsfunktion der Regelstrecke mit Ausgleich mit einer der über die Initialeinheit (9) auswählbaren Filtereinrichtung (4), ergibt sich allgemein:

$$G_{SF}(s) = \left( \frac{(1 + T_{D1}s) \cdot (1 + T_{D2}s) \cdot \ldots}{(1 + T_{R1}s) \cdot (1 + T_{R2}s) \cdot \ldots} \right) \cdot \left( \frac{K_S \cdot e^{-T_t s}}{(1 + T_{S1}s) \cdot (1 + T_{S2}s) \cdot \ldots} \right).$$

Wie hier zu erkennen ist, besteht die Möglichkeit der teilweisen oder vollständigen Kompensation der für das Verzögerungsverhalten der Regelstrecke mit Ausgleich verantwortlichen Verzögerungszeitkonstanten $T_{S1}$, $T_{S2}$, ... mit den differenzierenden Zeitkonstanten des Zähler-Terms der Filtereinrichtung (4) $T_{D1}$, $T_{D2}$, ....
Mit der Summe aller verzögernden Zeitkonstanten $T_{S\_Gesamt}$ der Regelstrecke mit Ausgleich mit

$$T_{S\_Gesamt} = T_{S1} + T_{S2} + \cdots = T_S$$

und damit gleich der ermittelten Verzögerungszeitkonstante ($T_S$) eines totzeitbehafteten PT1-Modells zu setzen ist und mit der Summe aller differenzierenden Zeitkonstanten $T_{S\_Gesamt}$ der vorgeschalteten Filtereinrichtung (3)

$$T_{D\_Gesamt} = T_{D1} + T_{D2} + \cdots,$$

verbleibt bei einer teilweisen Kompensation ($T_{D1} + T_{D1} + \ldots < T_{S1} + T_{S2} + \ldots$) eine resultierende Zeitkonstante $\tilde{T}_S$ der Regelstrecke mit Ausgleich, mit

$$\tilde{T}_S = T_{S\_Gesamt} - T_{D\_Gesamt} > 0.$$

Im Ergebnis wird damit die Summe der Verzögerungszeiten $T_{S\_Gesamt}$ der Regelstrecke um den Anteil der Kompensationszeitkonstanten $T_{D\_Gesamt}$ der ersten Filtereinrichtung (4) reduziert, was zu einer Verbesserung des dynamischen Verhaltens der Zusammenschaltung von Filtereinrichtung (4) und der Regelstrecke führt.

Der zugehörige Dynamikfaktor ($C_W$), der sich zwischen 0 und 1 bewegen kann, berechnet sich aus:

$$C_W = \frac{T_{D\_Gesamt}}{T_{S\_Gesamt}}.$$

Der prozentuale Grad der erreichten Kompensation, von 0 bis 100%, berechnet sich demnach aus:

$$C_{W\%} = \frac{\left(T_{D\_Gesamt} \cdot 100\right)}{T_{S\_Gesamt}}.$$

Nach formelmäßiger Umstellung erhält man die Berechnung der Kompensationszeitkonstanten $T_{D\_Gesamt}$ der Filtereinrichtung (4) in Abhängigkeit vom vorzugebenden Dynamikfaktor $C_W$

$$T_{D\_Gesamt} = C_W \cdot T_{S\_Gesamt}.$$

Der vorzugebende Dynamikfaktor $C_W$ ist damit der einzig nach außen hin relevante Parameter, der das Zeitverhalten des von Filtereinrichtung (4) und Regelstrecke (2) gebildeten Systems beeinflusst.

Aus regelungstechnischer Sicht kann der Summe der Verzögerungszeiten $T_{s\_Gesamt}$ der Regelstrecke noch ein Anteil einer Totzeit ($T_t$) hinzugezogen werden.

Hierzu wird der der Regelstrecke zugeordnete Term der Übertragungsfunktion der Totzeit $e^{-TtS}$ durch eine Taylor Reihenentwicklung angenähert, nämlich

$$e^x = 1 + \frac{x}{1!} + \frac{x^2}{2!} + \frac{x^3}{3!} + \cdots + \frac{x^n}{n!} + \cdots,$$

mit $e^{-x} = \dfrac{1}{e^x}$ und $x = T_t s$

$$e^{-T_t s} = \frac{1}{1 + T_t s + \frac{T_t^{\,2}}{2}s^2 + \frac{T_t^{\,3}}{2}s^3 + \cdots}.$$

Der Forderung nach Betragsanschmiegung im Frequenzgang folgend ist hierdurch rein rechnerisch ein maximaler Anteil von $\dfrac{T_t}{2}$ kompensierbar, sodass man zu folgender Beziehung kommt:

$$T_{D\_Gesamt} = C_W \cdot \left(T_{S\_Gesamt} + \frac{T_t}{2}\right).$$

Bei der Wahl des vorzugebender Dynamikfaktor ($C_W$) sollte man, wie beim Anziehen einer Schraube, von Null an beginnend den Wert steigern und bei einem Dämpfungsverhalten des geschlossenen Regelkreises anhalten, welches nicht mehr dem geforderten Dämpfungsfaktor ($D_W$) entspricht.

Hier bietet die erfindungsgemäße Regelvorrichtung eine interessante Möglichkeit für den Anwender, indem man aus dem Verhalten des geschlossenen Regelkreises auf die Güte des modellierten Prozesses schließen kann.

So deutet zum Beispiel ein schleppendes Verhalten im Regelverlauf, das sich das anliegende Dämpfungsverhalten weit unterhalb des eingestellten Dämpfungsverhaltens bewegt und auf eine zu groß gewählte Zeitkonstante des modellierten Prozesses hin deutet. Hier ist die Zeitkonstante der Modellierung zu verkleinern. Die Regelvorrichtung wird dann auch erwartungsgemäß konfiguriert werden können.

Man erhält somit neben der Reglereinstellung auch ein genaueres Bild des zugehörigen PT1-Modells.

Abhängig vom der Ordnung der tatsächlichen Regelstrecke sollte auch die Wahl der Ordnung der ersten Filtereinrichtung (4) erfolgen, da sich so höhere Kompensationsgrade erzielen lassen.

Im regelungstechnischen Bereich ist die Angabe der Summenzeitkonstanten $T_\Sigma$ bekannt, die als Summe aller verzögernden Zeitkonstanten einer Regelstrecke $T_{S1}$, $T_{S2}$, ..., zuzüglich einer Streckentotzeit $T_t$ einer Regelstrecke und abzüglich aller differenzierenden Zeitkonstanten einer Regelstrecke $T_{DS1}$, $T_{DS2}$, ...:

$$T_\Sigma = T_{S1} + T_{S2} + \cdots + T_t - T_{DS1} - T_{DS2} - \cdots.$$

Im Falle einer teilweisen Kompensation der Streckenzeitkonstanten ergibt sich für die Zusammenschaltung von Filtereinrichtung (4) und der Regelstrecke mit Ausgleich eine resultierende Summenzeitkonstante $\widetilde{T_\Sigma}$. Hierzu zählt auch die Summe der von der Regelvorrichtung selbst eingebrachten Vorzögerungszeitkonstanten $T_R$, die einer realisierbaren Stellgröße der Regelvorrichtung dienen, sowie die Summe der differenzierenden Zeitkonstanten der Regelvorrichtung $T_{D\_Gesamt}$, mit

$$\widetilde{T_\Sigma} = T_{S\_Gesamt} + T_R + T_t - T_{D\_Gesamt}.$$

Der Verstärkungsfaktor ($K_C$) des Verstärkungsgliedes (5), der bei Regelstrecken mit Ausgleich durch das I-Glied (6) ergänzt wird, berechnet sich nach der Betragsanschiegung im Frequenzgang zu:

$$K_C = \left( \frac{1}{4 \cdot D_W{}^2 \cdot K_S \cdot \widetilde{T_\Sigma}} \right),$$

mit

$D_W \geq 0,$ ein vorzugebender Dämpfungsfaktor, welcher das Dämpfungsverhalten des geschlossenen Regelkreises beschreibt,

$K_S,$ dem ermittelten Übertragungsbeiwert des zu regelnden technischen Prozesses (2) mit Ausgleich, und

$\widetilde{T_\Sigma},$ der resultierende Summenzeitkonstante.

Die Parameter der erfindungsgemäßen Regelvorrichtung (1) sind demnach eindeutig bestimmt, einerseits durch die modelltechnisch erfassten Kenngrößen des Prozesses ($K_S$), ($T_S$) und ($T_t$), und andererseits durch die Vorgabe zum Dämpfungsverhaltens des geschlossenen Regelkreises, über den Dämpfungsfaktor ($D_w$), sowie über die Vorgabe zur Zeitverhalten des Regelkreises, über den Dynamikfaktor ($C_w$), als auch durch die Angabe der von der Regelvorrichtung zusätzlich eingebrachten Vorzögerungszeitkonstanten ($T_R$).

Im Falle einer Regelstrecken ohne Ausgleich und ohne die Anforderung einer Positionsfolgeregelung wird in der Regelvorrichtung (1) über die Initialisierungseinheit (9) und dort der Parameter der Regelungsart ($P_{Type}$) auf 2 gesetzt.

Hierdurch wird in der Regelvorrichtung (1) das I-Glied (6) überbrückt.

Für eine totzeitbehaftete Regelstrecke ohne Ausgleich mit Verzögerung höherer Ordnung lautet die Übergangsfunktion:

$$G_S(s) = \frac{K_{IS}}{s} \cdot \frac{e^{-T_t s}}{(1 + T_{S1}s) \cdot (1 + T_{2S}s) \cdot ...}.$$

Vereinfacht kann eine solche Regelstrecke auch über ein totzeitbehaftetes IT1-Modell genähert werden, welches über die Prozesskenngrößen Integrationsbeiwert ($K_{IS}$), ermittelte Totzeit ($T_t$) sowie der ermittelten Verzögerungs-zeitkonstante ($T_S$) definiert ist, mit

$$G_S(s) = \frac{K_{IS}}{s} \cdot \frac{e^{-T_t s}}{(1 + T_S s)},$$

In diesem Falle berechnet sich der Verstärkungsfaktor ($K_S$) des Verstärkungsgliedes (5) nach der Betragsanschiegung im Frequenzgang zu:

$$K_C = \left( \frac{1}{4 \cdot D_W{}^2 \cdot K_{IS} \cdot \widetilde{T_\Sigma}} \right),$$

mit
$D_W \geq 0$, ein vorzugebender Dämpfungsfaktor welcher das Dämpfungsverhalten des geschlossenen Regelkreises beschreibt.

$K_{IS}$, dem ermittelten Integrationsbeiwert des zu regelnden technischen Prozesses (2) ohne Ausgleich,

$\widetilde{T_\Sigma}$ der resultierenden konzentrierte Zeitkonstante des zu regelnden technischen Prozesses (2), die errechnet wird durch

$$\widetilde{T_\Sigma} = T_{S\_Gesamt} + T_R + T_t - T_{D\_Gesamt}.$$

Alle anderen Beschreibungen zur Vorgabe des Zeitverhaltens des Regelkreises über den Dynamikfaktors ($C_w$) entsprechen den zuvor genannten Beschreibungen der Regelung von totzeitbehafteten Regelstrecken mit Ausgleich.
Die Parameter der erfindungsgemäßen Regelvorrichtung (1) sind demnach auch in diesem Falle eindeutig bestimmt: einerseits durch die modelltechnisch erfassten Kenngrößen des Prozesses ($K_{IS}$), ($T_S$) und ($T_t$), und anderer-seits durch die Vorgabe zum Dämpfungsverhalten des geschlossenen Regelkreises, über den Dämpfungsfaktor ($D_w$), und durch die Vorgabe zur Zeitverhaltens des Regelkreises, über den Dynamikfaktor ($C_w$), als auch durch die Angabe der von der Regelvorrichtung zusätzlich eingebrachten Vorzögerungszeitkonstanten ($T_R$).
Im Falle einer Regelstrecke ohne Ausgleich und mit der Anforderung einer Positionsfolgeregelung wird in der Regelvorrichtung (1) über die Initialisierungseinheit (9) und dort der Parameter der Regelungsart ($P_{Type}$) auf 3 gesetzt.
Hierdurch wird das I-Glied (6) in der Regelvorrichtung (1) wieder zugeschaltet und dessen Überbrückung wieder aufgehoben. Zusätzlich wird die Filtereinrichtung (7) der Regelvorrichtung zugeschaltet und dessen zusätzliche differenzierende Zeitkonstante nach der Betragsanschiegung im Frequenzgang optimiert.
Die Übertragungsfunktion der zusätzliche Filtereinrichtung (7) wird dargestellt durch:

$$G_{FI}(s) = \left( \frac{(1 + T_{DI} s)}{(1 + T_{RI} s)} \right),$$

mit

$T_{DI} > 0$ einer differenzierenden Zeitkonstante , die ermittelt wird durch

$$T_{DI} = \alpha \cdot \widetilde{T_\Sigma}$$

mit
$\alpha$ = 2 bis 4 in der Regelvorrichtung festgelegter Faktor,

$\widetilde{T_{\Sigma}}$   die resultierende konzentrierte Zeitkonstante des zu regelnden technischen Prozesses (2), die errechnet wird durch

$$\widetilde{T_{\Sigma}} = T_{S\_Gesamt} + T_R + T_t - T_{D\_Gesamt}$$

$T_{RI}$   eine verzögernde Zeitkonstante > Null

In diesem Falle berechnet sich der Verstärkungsfaktor $K_C$ des Verstärkungsgliedes (5) nach der Betragsanschiegung im Frequenzgang zu:

$$K_C = \left( \frac{1}{8 \cdot D_W{}^2 \cdot K_{IS} \cdot \widetilde{T_{\Sigma}}{}^2} \right),$$

mit

$D_w \geq 0,$   ein vorzugebender Dämpfungsfaktor, welcher das Dämpfungsverhalten des geschlossenen Regelkreises beschreibt,

$K_{IS},$   der ermittelte Integrationsbeiwert des zu regelnden technischen Prozesses (2) ohne Ausgleich,

$\widetilde{T_{\Sigma}}$   die resultierende konzentrierte Zeitkonstante des zu regelnden technischen Prozesses (2), die errechnet wird durch

$$\widetilde{T_{\Sigma}} = T_{S\_Gesamt} + T_R + T_t - T_{D\_Gesamt}$$

Alle anderen Beschreibungen zur Vorgabe des Zeitverhaltens des Regelkreises über den Dynamikfaktors ($C_w$), entsprechen den zuvor genannten Beschreibungen der Regelung von totzeitbehafteten Regelstrecken mit Ausgleich.

Die Parameter der erfindungsgemäßen Regelvorrichtung (1) sind demnach auch in diesem Falle eindeutig bestimmt: einerseits durch die modelltechnisch erfassten Kenngrößen des Prozesses ($K_{IS}$), ($T_S$) und ($T_t$), und andererseits durch die Vorgabe zum Dämpfungsverhalten des geschlossenen Regelkreises, über den Dämpfungsfaktor ($D_W$), sowie der Vorgabe des Zeitverhaltens des Regelkreises, über den Dynamikfaktor ($C_w$), als auch über die Angabe der von der Regelvorrichtung zusätzlich eingebrachten Vorzögerungszeitkonstanten ($T_R$).

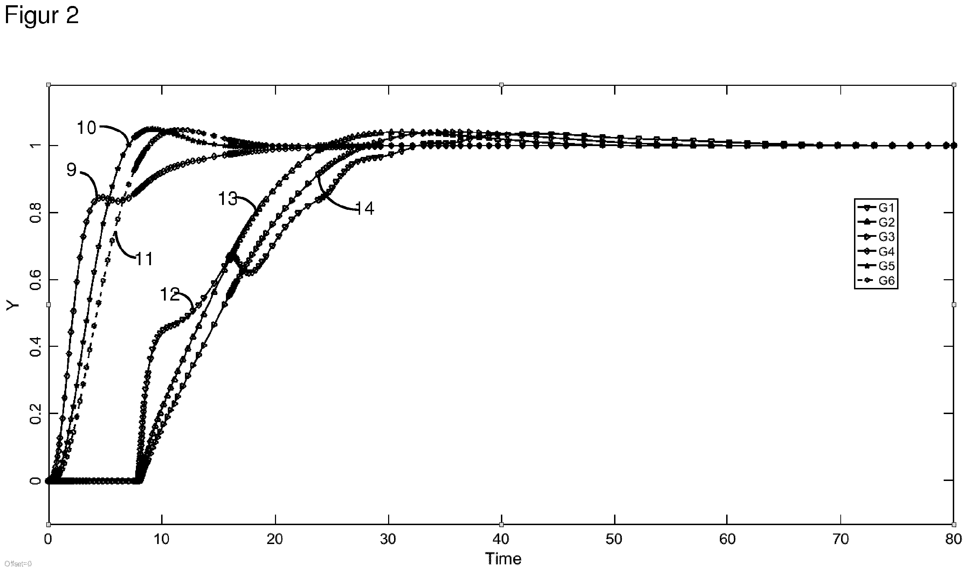

In **Figur 2** ist das Führungsverhalten verschiedener Regler an einer reinen verzögerungsbehafteten Regelstrecke 4-ter Ordnung (Kurven 9, 10, 11) und an einer totzeitbehafteten Regelstrecke mit 2-ter Ordnung (Kurven 12, 13, 14) in Form von Zeitdiagrammen mit der Abszisse als Zeitachse und der Ordinate für die normierte Regelgröße dargestellt.

Die Kurve (9) wurde mit einem PID-Regler gewonnen, der entsprechend der Einstellregel nach Chien, Hrones und Reswick mit aperiodischem Führungsverhalten entworfen wurde. Hier erkennt man eine unzureichende Einstellung, wodurch der Regler mit der dominanten Totzeit der Regelstrecke nur schlecht einregeln kann. Zur Erzeugung der beiden Kurven (10) und (11) wurde die erfindungsgemäße Regelvorrichtung mit einer Filtereinrichtung 2-ter Ordnung verwendet, wobei die Unterschiede der Kurven aus verschiedenen Reglereinstellungen resultieren. Beide Kurven wurden mit dem gleichen Dämpfungsfaktor ($D_W$) von 0,7 aufgenommen. Bei Kurve (10) war ein Dynamikfaktor ($C_W$) von 0,5 (50%) und bei Kurve (11) ein Dynamikfaktor ($C_W$) von 0,6 (60%) gewählt. Zwei Punkte sind beim Führungsverhalten besonders wichtig: Zum einen erfolgt der Einschwingvorgang mit der erfindungsgemäße Regelvorrichtung schneller und ruhiger als mit dem konventionell eingestellten PID-Regler. Zum anderen kann bei der erfindungsgemäßen Regelvorrichtung das Zeitverhalten des Einschwingvorgangs durch den Dynamikfaktor ($C_W$), sowie dessen Überschwingverhalten durch den Dämpfungsfaktor ($D_W$) in weiten Bereichen unabhängig voneinander variiert werden, so dass dem eigenen Empfinden entsprechend eine gute Reglereinstellung gefunden werden kann.

Vorteilhaft wirkt sich bei der erfindungsgemäße Regelvorrichtung die Tatsache aus, dass die Parameter zielgerichtet die Eigenschaften des geschlossenen Regelkreises beeinflussen und eine Veränderung des Dämpfungsverhaltens gezielt über den Dämpfungsfaktor ($D_W$) angepasst werden kann, während eine Veränderung des Zeitverhaltens des Regelkreises gezielt über den Dynamikfaktors ($C_w$) angepasst werden kann.

Obwohl in Figur 2 nur die zwei Kurven (10) und (11) der erfindungsgemäßen Regelvorrichtung zu dieser Regelstrecke gezeigt sind, ist selbstverständlich ein kontinuierlicher Übergang zwischen diesen Kurven bei konstantem Dämpfungsverhalten möglich. Genauso ist auch eine Veränderung hin zu einem höheren oder geringerem Überschwingverhalten möglich.

Die Kurven (12) der totzeitbehafteten Regelstrecke mit 2-ter Ordnung wurde ebenfalls mit einem PID-Regler gewonnen, der entsprechend der Einstellregel nach Chien, Hrones und Reswick mit aperiodischem Führungsverhalten entworfen wurde. Auch hier erkennt man eine unzureichende Einstellung, wodurch der Regler die Regelstrecke schlecht einregelt. Zur Erzeugung der beiden Kurven (13) und (14) wurde die erfindungsgemäße Regelvorrichtung mit einer Filtereinrichtung 2-ter Ordnung verwendet, wobei die Unterschiede der Kurven aus verschiedenen Reglereinstellungen resultieren. Bei beiden Kurven wurden mit dem gleichen Dämpfungsfaktor ($D_W$) von 0,7 aufgenommen. Bei Kurve (13) war ein Dynamikfaktor ($C_W$) von 0,5 (50%) und bei Kurve (14) ein Dynamikfaktor ($C_W$) von 0,6 (60%) gewählt.

Auch hier wirkt sich bei der erfindungsgemäße Regelvorrichtung die Tatsache aus, dass die Parameter zielgerichtet die Eigenschaften des geschlossenen Regelkreises beeinflussen, wobei eine Veränderung des Dämpfungsverhaltens gezielt über den Dämpfungsfaktor ($D_w$) angepasst werden kann, während eine Veränderung des Zeitverhaltens des Regelkreises gezielt über den Dynamikfaktors ($C_w$) angepasst werden kann.

Eine weitere Verbesserung der Regelgüte gegenüber dem PID-Regler kann durch die Aktivierung der Filtereinrichtung 3-ter Ordnung erreicht werden, was sich insbesondere bei Regelstrecken höherer Ordnung bemerkbar macht.

Die gezeigten Kurven (9) bis (14) gehen von idealen Bedingungen aus und demonstrieren, was theoretisch mit der erfindungsmäßigen Regelvorrichtung erreichbar ist. Unter realen Bedingungen, wenn zum Beispiel das Prozessmodell ungenau ist oder Begrenzungen wirken, kann das reale Verhalten vom idealen Verhalten abweichen.

Die erfindungsgemäße Regelvorrichtung bietet aber auch die Möglichkeit, aus dem Verhalten des geschlossenen Regelkreises auf die Güte des modellierten Prozesses zu schließen.

So deutet z.B. ein schleppendes Verhalten im Regelverlauf, der sich von seinem Einschwingverhalten weit unterhalb des eingestellten Dämpfungsverhaltens bewegt, auf eine zu groß gewählte Zeitkonstante des modellierten Prozesses hin. Hier ist die Zeitkonstante der Modellierung zu einem kleineren Wert anzupassen. Die erfindungsgemäße Regelvorrichtung kann dann auch erwartungsgemäß konfiguriert werden, da sie mit einem genaueren Model der Regelstrecke arbeitet.

Bei der Wahl des Dynamikfaktors ($C_W$) kann man, wie beim Anziehen einer Schraube, von Null an beginnend den Wert steigern und bei einem Dämpfungsverhalten des geschlossenen Regelkreises anhalten, welches nicht mehr dem vorgegebenen Dämpfungsfaktor ($D_w$) entspricht. Eine weitere Verbesserung der Dynamikeigenschaft im geschlossenen Regelkreis kann dann nur noch über eine Erhöhung der Ordnung der ersten Filtereinrichtung (4) herbeigeführt werden.

Die erfindungsmäßige Regelvorrichtung zeigt auch bei Einwirken von Störungen auf die Stellgröße (u), oder auf die Regelgröße (y) ein robustes Verhalten.

*BEZUGSZEICHENLISTE*

| | | | | |
|---|---|---|---|---|
| 1 | Regelvorrichtung | | $D_W$ | vorzugebender Dämpfungsfaktor |
| 2 | zu regelnder technischer Prozess (Regelstrecke) | | $K_S$ | ermittelte Übertragungsbeiwert einer Regelstrecke mit Ausgleich |
| 3 | Vergleichseinrichtung | | | |
| 4 | erste Filtereinrichtung | | $K_{IS}$ | ermittelte Integrationsbeiwert einer Regelstrecke ohne Ausgleich |
| 5 | Verstärkungsglied | | | |
| 6 | I-Glied | | | |
| 7 | zweite Filtereinrichtung | | $P_{Type}$ | Parameter zur Auswahl des Typs des zu regelnden Prozesses |
| 8 | Umschalter | | | |
| 9 | Initialisierungseinheit | | $T_R$ | Summe der Vorzögerungszeitkonstante der beiden Filtereinrichtungen |
| u | Stellgröße | | | |
| w | Führungsgröße | | $T_S$ | ermittelte Verzögerungszeitkonstante der Regelstrecke |
| y | Regelgröße | | | |
| $C_w$ | vorzugebender Dynamikfaktor | | $T_t$ | ermittelte Totzeit der Regelstrecke |
| $F_{Type}$ | Parameter zur Auswahl des Typs der ersten Filtereinrichtung | | | |

**Patentansprüche**

1. Regelvorrichtung (1) zur Regelung eines technischen Prozesses (2) aufweisend mindestens eine Vorrichtung zur Ausgeben von einer Stellgrösse (u), welche intern eine Differenz bildet zwischen

- einer Führungsgröße (w) als erstem Eingangssignal, und
- einer Regelgröße (y) als zweitem Eingangssignal und daraus
- eine Stellgröße (u) ermittelt,

des Weiteren aufweisend

- mindestens eine interne Signalverarbeitung zur Beeinflussung des Zeitverhaltens sowie des Dämpfungsverhalten des von Regelvorrichtung (1) und dem technischem Prozess (2) zusammen gebildeten Regelkreises,

**dadurch gekennzeichnet, dass**
mindestens zwei Filtervorrichtungen (4) und (7), ein Verstärkungsglied (5) und ein I-Glied (6) zur Signalverarbeitung vorgesehen sind,
wobei
eine **erste Filtereinrichtung (4)** derart mit dem Prozess (2) zusammenwirkt, dass sich das **Zeitverhalten** des von der Regelvorrichtung (1) und dem technischem Prozess (2) zusammen gebildeten Regelkreises durch eine Veränderung der Eigenschaft der ersten Filtereinrichtung (4) beeinflussen lässt,
und dass
mindestens ein **Verstärkunasalied (5)** vorhanden ist, welches derart mit dem Prozess (2) zusammenwirkt, dass sich das **Dämpfungsverhalten** des von Regelvorrichtung (1) und Prozess (2) gebildeten Regelkreises durch eine Veränderung des Verstärkungsfaktors des Verstärkungsglieds (5) beeinflussen lässt,
und dass
eine **zweite Filtereinrichtung (7)** sowie das I-Glied (6) einzeln voneinander aktivierbar sind.

**2.** Regelvorrichtung nach Anspruch 1,
**dadurch gekennzeichnet, dass**
im Falle eines zu regelnden technischen Prozesses (2) mit einem Übergangsverhalten mit Ausgleich, d.h. eines Prozesses, dessen Sprungantwort auf einen neuen Beharrungszustand zuläuft

- die **zweite Filtereinrichtung (7)** deaktiviert und
- das I-Glied (6) aktiviert ist,

wodurch
über die **erste Filtereinrichtung (4)** das **Zeitverhalten** und über das **Verstärkungsglied (5)** das **Dämpfungsverhalten** des von Regelvorrichtung (1) und Prozess (2) gebildeten Regelkreises beeinflusst wird und über das I-Glied (6) eine verschwindende Regelabweichung bewirkt wird.

**3.** Regelvorrichtung nach Anspruch 1,
**dadurch gekennzeichnet, dass**
im Falle eines zu regelnden Prozesses (2) mit einem Übergangsverhalten ohne Ausgleich und mit der Forderung nach einer Positionsfolgeregelung

- die **zweite Filtereinrichtung (7)** aktiviert und auch
- das I-Glied (6) aktiviert sind,

wodurch
die **erste Filtereinrichtung (4),** das **Verstärkungsglied (5)** und das I-Glied(6) durch eine **zweite Filtervorrichtung (7)** ergänzt werden, und den aus Regelvorrichtung (1) und Prozess (2) gebildeten Regelkreises zusätzlich stabilisiert.

**4.** Regelvorrichtung nach Anspruch 1,
**dadurch gekennzeichnet, dass**
im Falle eines zu regelnden Prozesses (2) mit einem Übergangsverhalten ohne Ausgleich und ohne die Forderung nach einer Positionsfolgeregelung

- sowohl **die zweite Filtereinrichtung (7)** als auch
- das I-Glied (6) deaktiviert sind

wodurch
nur die **erste Filtereinrichtung (4)** das **Zeitverhalten** und das **Verstärkungsglied (5)** das **Dämpfungsverhalten**

des aus Regelvorrichtung (1) und Prozess (2) gebildeten Regelkreises bestimmen.

5. Regelvorrichtung nach einem der Ansprüche 1 bis 4,
**dadurch gekennzeichnet, dass**
die **erste Filtereinrichtung (4)** eine Übertragungsfunktion erster, zweiter oder dritter Ordnung aufweist, die definiert ist durch

erste Ordnung:

$$G_F(s) = \left(\frac{(1+T_{D1}s)}{(1+T_{R1}s)}\right),$$

zweite Ordnung

$$G_F(s) = \left(\frac{(1+T_{D1}s)\cdot(1+T_{D2}s)}{(1+T_{R1}s)\cdot(1+T_{R2}s)}\right),$$

dritte Ordnung:

$$G_F(s) = \left(\frac{(1+T_{D1}\cdot s)\cdot(1+T_{D2}\cdot s)\cdot(1+T_{D3}\cdot s)}{(1+T_{R1}\cdot s)\cdot(1+T_{R2}\cdot s)\cdot(1+T_{R3}\cdot s)}\right),$$

worin

$T_{D1}$, $T_{D2}$ und $T_{D3}$ differenzierende Zeitkonstanten des Filters > Null sind,
$T_{R1}$, $T_{R2}$ und $T_{R3}$ verzögernde Zeitkonstanten des Filters > Null sind,

und

s ein Laplace-Operator ist,

und
die Summe aller differenzierenden Zeitkonstanten $T_{D1}$, $T_{D2}$ und $T_{D3}$ der ersten Filtereinrichtung (4) als $T_{D\_Gesamt}$ definiert ist, nämlich

$$T_{D\_Gesamt} = T_{D1} + T_{D2} + \cdots$$

wobei gefordert wird, dass
$T_{D\_Gesamt}$ maximal der Summe aller verzögernden Zeitkonstanten $T_{S1}$, $T_{S2}$, ... inklusive des halben Anteils der ermittelten Totzeit von $\frac{T_t}{2}$ des zu regelnden technischen Prozesses (2) entsprechen darf, nämlich

$$T_{D\_Gesamt} \leq T_{S\_Gesamt} + \frac{T_t}{2}$$

mit

$T_{S\_Gesamt}$ die Summe aller verzögernden Zeitkonstanten $T_{S1}$, $T_{S2}$, ... > Null des zu regelnden technischen Prozesses (2), nämlich

$$T_{S\_Gesamt} = T_{S1} + T_{S2} + \cdots = T_S$$

und damit gleich der ermittelten Verzögerungszeitkonstante ($T_S$) eines totzeitbehafteten PT1-Modells zu setzen ist und

$T_t$ die ermittelte Totzeit $\geq$ Null des zu regelnden technischen Prozesses (2) ist,

und

der Parameter ($C_W$) als vorzugebender Dynamikfaktor der Regelvorrichtung (1) definiert ist, der zwischen 0 und 1 liegt und die differenzierenden Zeitkonstanten des Filters bestimmt und damit das Zeitverhalten des von Regelvorrichtung (1) und dem technischen Prozess (2) gebildeten Regelkreises beeinflusst, nämlich

$$C_W = \frac{T_{D\_Gesamt}}{T_{S\_Gesamt} + \frac{T_t}{2}}.$$

6. Regelvorrichtung nach einem der Ansprüche 1 bis 4,
   **dadurch gekennzeichnet, dass**
   die **zweite Filtereinrichtung (7)** eine Übertragungsfunktion aufweist, die definiert ist durch

$$G_{F1}(s) = \left( \frac{(1 + T_{DI}s)}{(1 + T_{RI}s)} \right)$$

worin

$T_{DI}$ eine differenzierende Zeitkonstante des Filters > Null ist,

die definiert ist durch

$$T_{DI} = \alpha \cdot \widetilde{T_\Sigma}$$

und

$T_{RI}$ eine verzögernde Zeitkonstante des Filters > Null ist,

und

s ein Laplace-Operator ist,

wobei

$\alpha$ ein Faktor von 2 bis 4 ist, und

$\widetilde{T_\Sigma}$ die resultierende konzentrierte Zeitkonstante des zu regelnden technischen Prozesses (2) ist, die definiert ist durch

$$\widetilde{T_\Sigma} = T_{S\_Gesamt} + T_R + T_t - T_{D\_Gesamt}$$

mit

$T_{s\_Gesamt}$ die Summe aller verzögernden Zeitkonstanten $T_{S1}$, $T_{S2}$, ... > Null des zu regelnden technischen Prozesses (2) ist, nämlich

$$T_{S\_Gesamt} = T_{S1} + T_{S2} + \cdots = T_S$$

und damit gleich der ermittelten Verzögerungszeitkonstante ($T_S$) eines totzeitbehafteten PT1-Modells zu setzen ist und

$T_R$ die zusätzlich eingebrachte Vorzögerungszeitkonstante der Regelvorrichtung, die gleich der Summe der verzögernden Zeitkonstanten > Null der beiden Filtereinrichtungen (4) und (7) ist, nämlich

$$T_R = T_{R1} + T_{R2} + \cdots + T_{RI}$$

und

$T_t$ die ermittelte Totzeit $\geq$ Null des zu regelnden technischen Prozesses (2) ist, und
$T_{D\_Gesamt}$ die Summe aller differenzierenden Zeitkonstanten > Null $T_{D1}$, $T_{D2}$, ... der **ersten Filtereinrichtung (4) ist** nämlich

$$T_{D\_Gesamt} = T_{D1} + T_{D2} + \cdots$$

7.  Regelvorrichtung nach Anspruch 1 bis 4,
    **dadurch gekennzeichnet, dass**
    der **Verstärkungsfaktor K$_c$** des Verstärkungsgliedes (5) berechnet wird durch

    a) im Falle eines zu regelnden Prozesses (2) mit einem Übergangsverhalten mit Ausgleich, nämlich

$$K_C = \left( \frac{1}{4 \cdot D_W{}^2 \cdot K_S \cdot \widetilde{T_\Sigma}} \right),$$

    b) im Falle eines zu regelnden Prozesses (2) mit einem Übergangsverhalten ohne Ausgleich und mit der Forderung nach einer Positionsfolgeregelung,

$$K_C = \left( \frac{1}{8 \cdot D_W{}^2 \cdot K_{IS} \cdot \widetilde{T_\Sigma}{}^2} \right),$$

    c) im Falle eines zu regelnden Prozesses (2) mit einem Übergangsverhalten ohne Ausgleich und ohne die Forderung nach einer Positionsfolgeregelung,

$$K_C = \left( \frac{1}{4 \cdot D_W{}^2 \cdot K_{IS} \cdot \widetilde{T_\Sigma}} \right),$$

    worin

    $D_W$ ein vorzugebender Dämpfungsfaktor $\geq$ Null ist, welches das Dämpfungsverhalten des gesamten Regelkreises beschreibt,
    $K_S$ der ermittelte Übertragungsbeiwert des zu regelnden technischen Prozesses (2) mit Ausgleich ist,
    $K_{IS}$ der ermittelte Integrationsbeiwert des zu regelnden technischen Prozesses (2) ohne Ausgleich ist,
    $\widetilde{T_\Sigma}$ die resultierende konzentrierte Zeitkonstante des zu regelnden technischen Prozesses (2) ist, die

definiert ist durch

$$\widetilde{T_{\Sigma}} = T_{S\_Gesamt} + T_R + T_t - T_{D\_Gesamt}$$

mit

$T_{S\_Gesamt}$ die Summe aller verzögernden Zeitkonstanten $T_{S1}$, $T_{S2}$, ... > Null des zu regelnden technischen Prozesses (2), nämlich

$$T_{S\_Gesamt} = T_{S1} + T_{S2} + \cdots = T_S$$

und damit gleich der ermittelten Verzögerungszeitkonstante ($T_S$) eines totzeitbehafteten PT1-Modells zu setzen ist und

$T_R$ die zusätzlich eingebrachte Vorzögerungszeitkonstante der Regelvorrichtung, die gleich der Summe der verzögernden Zeitkonstanten > Null der beiden Filtereinrichtungen, nämlich

$$T_R = T_{R1} + T_{R2} + \cdots + T_{Rl}$$

und

$T_t$ die ermittelte Totzeit $\geq$ Null des zu regelnden technischen Prozesses (2) ist, und
$T_{D\_Gesamt}$ die Summe aller differenzierenden Zeitkonstanten $T_{D1}$, $T_{D2}$, ... > Null der **zweiten Filtereinrichtung (4)** ist, nämlich

$$T_{D\_Gesamt} = T_{D1} + T_{D2} + \cdots.$$

**Claims**

1. Control device (1) for controlling a technical process (2), having at least one device for outputting a manipulated variable (u),
which device internally forms a difference between

   - a reference variable (w) as first input signal and
   - a control variable (y) as second input signal and
   - determines a manipulated variable (u) therefrom,

   furthermore having

   - at least one internal signal processing system for influencing the temporal behaviour and the damping behaviour of the control loop formed by the control device (1) and the technical process (2) together,

   **characterized in that**
   at least two filter devices (4) and (7), an amplification element (5) and an I-element (6) are provided for signal processing,
   wherein
   a **first filter apparatus (4)** interacts with the process (2) such that the **temporal behaviour** of the control loop, formed by the control device (1) and the technical process (2) together, is able to be influenced by a change in the property of the first filter apparatus (4),
   and **in that**
   at least one **amplification element (5)** is present that interacts with the process (2) such that the **damping behaviour** of the control loop, formed by the control device (1) and the process (2), is able to be influenced by a change in the amplification factor of the amplification element (5),

and **in that**
a **second filter apparatus (7)** and the I-element (6) are able to be activated separately from one another.

2. Control device according to Claim 1,
**characterized in that**
in the case of a technical process (2) to be controlled having a transient behaviour with compensation, that is to say of a process whose step response progresses to a new steady state,

- the **second filter apparatus (7)** is deactivated and
- the I-element (6) is activated,

as a result of which
the **temporal behaviour** of the control loop, formed by the control device (1) and the process (2), is influenced by the **first filter apparatus (4)** and the **damping behaviour** thereof is influenced by the **amplification element (5),** and a fading control deviation is brought about by the I-element (6).

3. Control device according to Claim 1, **characterized in that**,
in the case of a process (2) to be controlled having a transient behaviour without compensation and with the requirement for position follow-up control,

- the **second filter apparatus (7)** is activated and also
- the I-element (6) is activated,

as a result of which
the **first filter apparatus (4),** the **amplification element (5)** and the I-element (6) are supplemented by a **second filter device** (7), and also stabilizes the control loop formed from the control device (1) and the process (2).

4. Control device according to Claim 1,
**characterized in that**,
in the case of a process (2) to be controlled having a transient behaviour without compensation and without the requirement for position follow-up control,

- both **the second filter apparatus (7)** and
- the I-element (6) are deactivated,

as a result of which
only the **first filter apparatus (4)** determines the **temporal behaviour** and the **amplification element (5)** determines the **damping behaviour** of the control loop formed from the control device (1) and the process (2).

5. Control device according to one of Claims 1 to 4,
**characterized in that**
the **first filter apparatus (4)** has a first-order, second-order or third-order transfer function, which is defined by

first order:

$$G_F(s) = \left( \frac{(1+T_{D1}s)}{(1+T_{R1}s)} \right),$$

second order

$$G_F(s) = \left( \frac{(1+T_{D1}s)\cdot(1+T_{D2}s)}{(1+T_{R1}s)\cdot(1+T_{R2}s)} \right),$$

third order:

$$G_F(s) = \left(\frac{(1+T_{D1}\cdot s)\cdot(1+T_{D2}\cdot s)\cdot(1+T_{D3}\cdot s)}{(1+T_{R1}\cdot s)\cdot(1+T_{R2}\cdot s)\cdot(1+T_{R3}\cdot s)}\right),$$

wherein

$T_{D1}$, $T_{D2}$ and $T_{D3}$ are differentiating time constants of the filter > zero,
$T_{R1}$, $T_{R2}$ and $T_{R3}$ are delaying time constants of the filter >zero,

and

s is a Laplace operator,

and
the sum of all differentiating time constants $T_{D1}$, $T_{D2}$ and $T_{D3}$ of the first filter apparatus (4) is defined as $T_{D\_overall}$, namely

$$T_{D\_overall} = T_{D1} + T_{D2} + \cdots$$

wherein it is essential that
$T_{D\_overall}$ may correspond at most to the sum of all delaying time constants $T_{S1}$, $T_{S2}$, ... including half of the determined dead time of $\dfrac{T_t}{2}$ of the technical process (2) to be controlled, namely

$$T_{D\_overall} \leq T_{S\_overall} + \frac{T_t}{2}$$

where

$T_{S\_overall}$ is the sum of all delaying time constants $T_{S1}$, $T_{S2}$, ... > zero of the technical process (2) to be controlled, namely

$$T_{S\_overall} = T_{S1} + T_{S2} + \cdots = T_S$$

and should therefore be set equal to the determined delay time constant ($T_S$) of a dead time-impacted PT1 model, and

$T_t$ is the determined dead time $\geq$ zero of the technical process (2) to be controlled,

and
the parameter ($C_W$) is defined as a dynamic factor, to be predefined, of the control device (1) that lies between 0 and 1 and determines the differentiating time constants of the filter, and therefore influences the temporal behaviour of the control loop formed by the control device (1) and the technical process (2), namely

$$C_W = \frac{T_{D\_overall}}{T_{S\_overall} + \dfrac{T_t}{2}}.$$

6. Control device according to one of Claims 1 to 4,
   **characterized in that**
   the **second filter apparatus (7)** has a transfer function that is defined by

$$G_{F1}(s) = \left( \frac{(1 + T_{DI}s)}{(1 + T_{RI}s)} \right)$$

wherein

$T_{DI}$ is a differentiating time constant of the filter > zero,

which is defined by

$$T_{DI} = \alpha \cdot \widetilde{T_{\Sigma}}$$

and

$T_{RI}$ is a delaying time constant of the filter > zero,

and

s is a Laplace operator,

wherein

$\alpha$ is a factor from 2 to 4, and

$\widetilde{T_{\Sigma}}$ is the resultant concentrated time constant of the technical process (2) to be controlled, which is defined by

$$\widetilde{T_{\Sigma}} = T_{S\_overall} + T_R + T_t - T_{D\_overall}$$

where

$T_{S\_overall}$ is the sum of all delaying time constants $T_{S1}$, $T_{S2}$, ... > zero of the technical process (2) to be controlled, namely

$$T_{S\_overall} = T_{S1} + T_{S2} + \cdots = T_S$$

and should therefore be set equal to the determined delay time constant ($T_S$) of a dead time-impacted PT1 model, and

$T_R$ is the additionally incorporated delay time constant of the control device that is equal to the sum of the delaying time constants > zero of the two filter apparatuses (4) and (7), namely

$$T_R = T_{R1} + T_{R2} + \cdots + T_{RI}$$

and

$T_t$ is the determined dead time $\geq$ zero of the technical process (2) to be controlled, and

$T_{D\_overall}$ is the sum of all differentiating time constants > zero $T_{D1}$, $T_{D2}$, ... of the **first filter apparatus (4),** namely

$$T_{D\_overall} = T_{D1} + T_{D2} + \cdots$$

7. Control device according to Claim 1 to 4,
   **characterized in that**
   the **amplification factor K$_c$** of the amplification element (5) is calculated by

   a) in the case of a process (2) to be controlled having a transient behaviour with compensation, namely

   $$K_C = \left( \frac{1}{4 \cdot D_W{}^2 \cdot K_S \cdot \widetilde{T_\Sigma}} \right),$$

   b) in the case of a process (2) to be controlled having a transient behaviour without compensation and with the requirement for position follow-up control,

   $$K_C = \left( \frac{1}{8 \cdot D_W{}^2 \cdot K_{IS} \cdot \widetilde{T_\Sigma}{}^2} \right),$$

   c) in the case of a process (2) to be controlled having a transient behaviour without compensation and without the requirement for position follow-up control,

   $$K_C = \left( \frac{1}{4 \cdot D_W{}^2 \cdot K_{IS} \cdot \widetilde{T_\Sigma}} \right),$$

   wherein

   $D_W$ is a damping factor $\geq$ zero to be predefined, which describes the damping behavior of the overall control loop,
   $K_S$ is the determined transfer coefficient of the technical process (2) with compensation to be controlled,
   $K_{IS}$ is the determined integration coefficient of the technical process (2) without compensation to be controlled,
   $\widetilde{T_\Sigma}$ is the resultant concentrated time constant of the technical process (2) to be controlled, which is defined by

   $$\widetilde{T_\Sigma} = T_{S\_overall} + T_R + T_t - T_{D\_overall}$$

   where

   $T_{S\_overall}$ is the sum of all delaying time constants $T_{S1}$, $T_{S2}$, ... > zero of the technical process (2) to be controlled, namely

   $$T_{S\_overall} = T_{S1} + T_{S2} + \cdots = T_S$$

   and should therefore be set equal to the determined delay time constant ($T_S$) of a dead time-impacted PT1 model, and

   $T_R$ is the additionally incorporated delay time constant of the control device that is equal to the sum of the delaying time constants > zero of the two filter apparatuses, namely

$$T_R = T_{R1} + T_{R2} + \cdots + T_{RI}$$

and

$T_t$ is the determined dead time $\geq$ zero of the technical process (2) to be controlled, and
$T_{D\_overall}$ is the sum of all differentiating time constants $T_{D1}$, $T_{D2}$, ... > zero of the **second filter apparatus (4),** namely

$$T_{D\_overall} = T_{D1} + T_{D2} + \cdots.$$

**Revendications**

1. Dispositif de régulation (1) pour réguler un processus technique (2), présentant au moins un dispositif pour délivrer une grandeur de commande (u) qui forme en interne une différence entre

   - une grandeur de référence (w) en tant que premier signal d'entrée, et
   - une grandeur réglée (y) en tant que deuxième signal d'entrée, et

   détermine à partir de celles-ci

   - une grandeur de commande (u),

   présentant en outre

   - au moins un traitement de signal interne pour influencer le comportement dans le temps ainsi que le comportement d'atténuation du circuit de régulation formé conjointement par le dispositif de régulation (1) et le processus technique (2),

   **caractérisé en ce que**
   au moins deux dispositifs de filtrage (4) et (7), un élément fonctionnel d'amplification (5) et un élément fonctionnel I (6) sont prévus pour le traitement de signal,
   dans lequel un premier dispositif de filtrage (4) coopère avec le processus (2) de telle sorte que le comportement dans le temps du circuit de régulation formé conjointement par le dispositif de régulation (1) et le processus technique (2) peut être influencé par une modification de la propriété du premier dispositif de filtrage (4),
   et **en ce qu'**il existe au moins un élément fonctionnel d'amplification (5) qui coopère avec le processus (2) de telle sorte que le comportement d'atténuation du circuit de régulation formé conjointement par le dispositif de régulation (1) et le processus technique (2) peut être influencé par une modification du facteur d'amplification de l'élément fonctionnel d'amplification (5),
   et **en ce qu'**un deuxième dispositif de filtrage (7) ainsi que l'élément fonctionnel I (6) peuvent être activés séparément l'un de l'autre.

2. Dispositif de régulation selon la revendication 1, **caractérisé en ce que** dans le cas d'un processus technique (2) à réguler ayant un comportement transitoire avec compensation, c'est-à-dire d'un processus dont la réponse transitoire converge vers un nouvel état permanent,

   - le deuxième dispositif de filtrage (7) est désactivé, et
   - l'élément fonctionnel I (6) est activé,

   de sorte que le premier dispositif de filtrage (4) influence le comportement dans le temps et l'élément fonctionnel d'amplification (5) influence le comportement d'atténuation du circuit de régulation formé par le dispositif de régulation (1) et le processus (2), et l'élément fonctionnel I (6) provoque un écart de régulation infiniment petit.

3. Dispositif de régulation selon la revendication 1, **caractérisé en ce que** dans le cas d'un processus (2) à réguler ayant un comportement transitoire sans compensation et avec l'exigence d'une régulation de séquence de positions,

- le deuxième dispositif de filtrage (7) est activé, et
- l'élément fonctionnel I (6) est également activé,

de sorte que le premier dispositif de filtrage (4), l'élément fonctionnel d'amplification (5) et l'élément fonctionnel I (6) sont complétés par un deuxième dispositif de filtrage (7), et le circuit de régulation formé par le dispositif de régulation (1) et le processus (2) est stabilisé davantage.

4. Dispositif de régulation selon la revendication 1, **caractérisé en ce que** dans le cas d'un processus (2) à réguler ayant un comportement transitoire sans compensation et sans l'exigence d'une régulation de séquence de positions,

- aussi bien le deuxième dispositif de filtrage (7)
- que l'élément fonctionnel I (6)

sont désactivés,
de sorte que seul le premier dispositif de filtrage (4) détermine le comportement dans le temps et l'élément fonctionnel d'amplification (5) détermine le comportement d'atténuation du circuit de régulation formé par le dispositif de régulation (1) et le processus (2).

5. Dispositif de régulation selon l'une quelconque des revendications 1 à 4, **caractérisé en ce que** le premier dispositif de filtrage (4) présente une fonction de transfert du premier, du second ou du troisième ordre qui est définie par

premier ordre :

$$G_F(S) = \left(\frac{(1+T_{D1}s)}{(1+T_{R1}s)}\right),$$

second ordre :

$$G_F(S) = \left(\frac{(1+T_{D1}s)\cdot(1+T_{D2}s)}{(1+T_{R1}s)\cdot(1+T_{R2}s)}\right),$$

troisième ordre :

$$G_F(S) = \left(\frac{(1+T_{D1}\cdot s)\cdot(1+T_{D2}\cdot s)\cdot(1+T_{D3}\cdot s)}{(1+T_{R1}\cdot s)\cdot(1+T_{R2}\cdot s)\cdot(1+T_{R3}\cdot s)}\right),$$

où

$T_{D1}$, $T_{D2}$ et $T_{D3}$ sont des constantes de temps différentielles du filtre > zéro,
$T_{R1}$, $T_{R2}$ et $T_{r3}$ sont des constantes de temps de temporisation du filtre > zéro, et
s est un opérateur de Laplace,
et
la somme de toutes les constantes de temps différentielles $T_{D1}$, $T_{D2}$ et $T_{D3}$ du premier dispositif de filtrage (4) est définie par $T_{D\_Gesamt}$, à savoir

$$T_{D\_Gesamt} = T_{D1} + T_{D2} + ...$$

où il est exigé que
$T_{D\_Gesamt}$ puisse correspondre au maximum à la somme de toutes les constantes de temps de temporisation $T_{S1}$, $T_{S2}$, ..., y compris la moitié de la fraction du temps mort déterminé $\frac{T_t}{2}$ du processus technique (2) à réguler, à savoir

$$T_{D\_Gesamt} \leq T_{S\_Gesamt} + \frac{T_t}{2}$$

où

$T_{S\_Gesamt}$ est la somme de toutes les constantes de temps de temporisation $T_{S1}, T_{S2}, ... >$ zéro du processus technique (2) à réguler, à savoir

$$T_{S\_Gesamt} = T_{S1} + T_{S2} + ... = T_S$$

et donc égale à la constante de temps de temporisation déterminée ($T_S$) d'un modèle PT1 avec temps mort, et $T_t$ est le temps mort déterminé $\geq$ zéro du processus technique (2) à réguler,
et
le paramètre ($C_W$) est défini comme un facteur dynamique à spécifier du dispositif de régulation (1) qui est compris entre 0 et 1 et détermine les constantes de temps différentielles du filtre et donc le comportement dans le temps du circuit de régulation formé par le dispositif de régulation (1) et le processus technique (2), à savoir

$$C_W = \frac{T_{D\_Gesamt}}{T_{S\_Gesamt} + \frac{T_t}{2}}$$

**6.** Dispositif de régulation selon l'une quelconque des revendications 1 à 4, **caractérisé en ce que** le deuxième dispositif de filtrage (7) présente une fonction de transfert qui est définie par

$$G_{F1}(S) = \left(\frac{(1+T_{DI}s)}{(1+T_{RI}s)}\right)$$

où
$T_{DI}$ est une constante de temps différentielle du filtre > zéro qui est définie par

$$T_{DI} = \alpha \cdot \widetilde{T_\Sigma}$$

et
$T_{RI}$ est une constante de temps de temporisation du filtre > zéro,
et
s est un opérateur de Laplace,
où
$\alpha$ est un facteur de 2 à 4, et
$\widetilde{T_\Sigma}$ est la constante de temps concentrée résultante du processus technique (2) à réguler qui est définie par

$$\widetilde{T_\Sigma} = T_{S\_Gesamt} + T_R + T_t - T_{D\_Gesamt}$$

où
$T_{S\_Gesamt}$ est la somme de toutes les constantes de temps de temporisation $T_{S1}, T_{S2}, ... >$ zéro du processus technique (2) à réguler, à savoir

$$T_{S\_Gesamt} = T_{S1} + T_{S2} + ... = T_S$$

et est donc équivalente à la constante de temps de temporisation déterminée ($T_S$) d'un modèle PT1 avec temps mort, et
$T_R$ est la constante de temps de temporisation introduite en plus du dispositif de régulation qui est égale à la somme des constantes de temps de temporisation > zéro des deux dispositifs de filtrage (4) et (7), à savoir

$$T_R = T_{R1} + T_{R2} + \ldots + T_{RI}$$

et

$T_t$ est le temps mort déterminé $\geq$ zéro du processus technique (2) à réguler, et

$T_{D\_Gesamt}$ est la somme de toutes les constantes de temps différentielles > zéro $T_{D1}$, $T_{D2}$, ... du premier dispositif de filtrage (4), à savoir

$$T_{D\_Gesamt} = T_{D1} + T_{D2} + \ldots$$

7.  Dispositif de régulation selon les revendications 1 à 4, **caractérisé en ce que** le facteur d'amplification $K_c$ de l'élément fonctionnel d'amplification (5) est calculé par

a) dans le cas d'un processus (2) à réguler ayant un comportement transitoire avec compensation, à savoir

$$K_C = \left(\frac{1}{4 \cdot D_W{}^2 \cdot K_S \cdot \widetilde{T_\Sigma}}\right),$$

b) dans le cas d'un processus (2) à réguler ayant un comportement transitoire sans compensation et avec l'exigence d'une régulation de séquence de positions,

$$K_C = \left(\frac{1}{8 \cdot D_W{}^2 \cdot K_{IS} \cdot \widetilde{T_\Sigma}{}^2}\right),$$

c) dans le cas d'un processus (2) à réguler ayant un comportement transitoire sans compensation et sans l'exigence d'une régulation de séquence de positions,

$$K_C = \left(\frac{1}{4 \cdot D_W{}^2 \cdot K_{IS} \cdot \widetilde{T_\Sigma}}\right),$$

où

$D_W$ est un facteur d'atténuation à spécifier $\geq$ zéro qui décrit le comportement d'atténuation du circuit de régulation tout entier,

$K_S$ est le coefficient de transfert déterminé du processus technique (2) à réguler avec compensation,

$K_{IS}$ est le coefficient d'intégration déterminé du processus technique (2) à réguler sans compensation,

$\widetilde{T_\Sigma}$ est la constante de temps concentrée résultante du processus technique (2) à réguler qui est définie par

$$\widetilde{T_\Sigma} = T_{S\_Gesamt} + T_R + T_t - T_{D\_Gesamt}$$

où

$T_{S\_Gesamt}$ est la somme de toutes les constantes de temps de temporisation $T_{S1}$, $T_{S2}$, ... > zéro du processus technique (2) à réguler, à savoir

$$T_{S\_Gesamt} = T_{S1} + T_{S2} + \ldots = T_S$$

et est donc équivalente à la constante de temps de temporisation déterminée ($T_S$) d'un modèle PT1 avec temps mort, et

$T_R$ est la constante de temps de temporisation introduite en plus du dispositif de régulation qui est égale à la somme des constantes de temps de temporisation > zéro des deux dispositifs de filtrage, à savoir

$$T_R = T_{R1} + T_{R2} + \ldots + T_{RI}$$

et

$T_t$ est le temps mort déterminé $\geq$ zéro du processus technique (2) à réguler, et

$T_{D\_Gesamt}$ est la somme de toutes les constantes de temps différentielles > zéro $T_{D1}$, $T_{D2}$, ... du premier dispositif de filtrage (4), à savoir

$$T_{D\_Gesamt} = T_{D1} + T_{D2} + \ldots$$

Figur 1

Figur 2

EP 3 507 656 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2775360 A